# EUROPÄISCHE PATENTSCHRIFT

(11) **EP 1 054 344 B1**
(45) Veröffentlichungstag und Bekanntmachung des Hinweises auf die Patenterteilung: **23.12.2009**
(21) Anmeldenummer: 00110250.8
(22) Anmeldetag: 19.05.2000
(51) Int. Cl.: G06K 19/07, G06K 19/077, G02F 1/1333

(54) **Display zur Integration in kartenförmige Trägermedien**
Display for integration in a card-shaped support
Afficheur pour intégration dans un support en forme de carte

(30) Priorität: 20.05.1999 DE 19923138
(43) Veröffentlichungstag der Anmeldung: 22.11.2000
(73) Patentinhaber: Giesecke & Devrient GmbH, 81677 München (DE)
(72) Erfinder: Hoppe, Joachim, 81377 München (DE); Hohmann, Arno, 81369 München (DE)
(74) Vertreter: Klunker . Schmitt-Nilson . Hirsch

(56) Entgegenhaltungen:
- EP-A- 0 845 695
- WO-A-98/49652
- DE-A- 19 631 557
- DE-A- 19 732 161
- US-A- 5 869 150

## Beschreibung

Die Erfindung betrifft Displays als Halbzeug zur Integration in kartenförmige Trägermedien, insbesondere in Chipkarten, und ein entsprechendes Verfahren zum Integrieren der Displays in die Trägermedien bzw. Chipkarten.

Die Herstellung von Chipkartendisplays erfolgt üblicherweise separat von der Kartenfertigung auf einer dafür vorgesehenen, besonders widerstandsfähigen Trägerfolie. Nach der Erzeugung einer funktionalen Schicht, die nachfolgend als "Anzeige" bezeichnet wird, auf der Trägerfolie wird die Anzeige mit der Trägerfolie in die Karte integriert und mit den elektrischen Bauteilen der Chipkarte verbunden, die zur Ansteuerung des Displays notwendig sind. Die Herstellung des Displays separat von der Kartenfertigung bietet sich an, weil die Displayfertigung sehr verschieden zur Kartenherstellung und mit sehr hohen Investitionen für die Anlagentechnik verbunden ist. Kartendisplays werden daher regelmäßig von Displayherstellern gefertigt, die Displays auch für andere Märkte und Anwendungen herstellen.

Solche Displays sind immer sandwichartig aufgebaut und umfassen mindestens eine Basisschicht, auf der die funktionale Schicht für die Anzeige fest aufgebracht ist, und eine die Anzeige abdeckende Abdeckschicht. Die funktionale Schicht für die Anzeige wird beispielsweise durch Aufdampfen, Sputtern, Spin-Coating etc. erzeugt. Die funktionale Schicht kann beispielsweise ein Flüssigkristallmaterial sein oder aus leuchtendem Material bestehen. Sie kann auch Elektroden, Filter, Polarisatoren, Abstandhalter etc. aufweisen und insbesondere auf mehrere Schichten aufgeteilt sein. Die Schicht auf der die funktionale Schicht aufgebracht ist ist üblicherweise eine Folie, die nachfolgend als "Trägerfolie" bezeichnet ist da sie die funktionale Schicht trägt. Bekannte Trägerfolien bestehen beispielsweise aus PET.

Die Trägerfolie muß vergleichsweise dick ausgebildet sein, um für die Fertigung der Anzeige ausreichend widerstandsfähig zu sein. Zusammen mit der Abdeckfolie, die üblicherweise aus demselben dicken Folienmaterial wie die Trägerfolie besteht und über der funktionalen Schicht angeordnet ist ergibt sich eine Gesamtdicke des Displays, die ohne Überschreitung der Normdicke für die Chipkarte nur schwierig in die Karte zu integrieren ist. Darüber hinaus treten bei den herkömmlichen Displays Probleme hinsichtlich der biegedynamischen Belastbarkeit der Chipkarte auf, die ebenfalls bestimmten Normen genügen muß.

Ein weiterer Nachteil der herkömmlichen Displays ist darin zu sehen, daß sie an die speziellen Bedürfnisse der Chipkartentechnologie, insbesondere was die Kooperation mit anderen Bauelementen der Chipkarte betrifft, nicht optimal angepaßt sind.

US 5 869150 offenbart eine Substratträgervorrichtung, die ein Substrat eines Flüssigkristallanzeigeelementes auf ihrer Oberfläche trägt und das Substrat einem Prozeß zuführt, und eine Klebeschicht, deren Adhäsion zur Befestigung des Substrates, das auf die Oberfläche geklebt ist, sogar nach wiederholter Benutzung konstant bleibt. Das Substrat, das aus einer dünnen Glasplatte, Plastik etc. besteht, wird auf die Vorrichtung geklebt, und das Substrat mit der Vorrichtung wird einem Prozeß zugeführt, um ein Flüssigkristallanzeigeelement herzustellen. Folglich ist es möglich, ein Flüssigkristallanzeigeelement durch Verwendung einer Produktionslinie für ein herkömmliches Flüssigkristallanzeigeelement für Glas herzustellen, sogar wenn als Substratmaterialien z.B. eine dünne Glasplatte, Plastik, etc. verwendet würden, die unabhängig voneinander keine Härte und Steifigkeit haben. Darüber hinaus können die Produktionskosten eines Flüssigkristallanzeigeelementes im Vergleich zu einer einmal benutzbaren Vorrichtung stark gesenkt werden, da die Vorrichtung wiederholt benutzt werden kann.

Die unabhängigen Ansprüche wurden gegen diesen Stand der Technik abgegrenzt.

Der Erfindung liegt die Aufgabe zugrunde, Displays als Halbzeug für kartenförmige Trägermedien anzugeben, die zuverlässig gefertigt werden können und dennoch hinsichtlich Abmessungen und dynamischer Belastbarkeit für die Integration in kartenförmige Trägermedien besonders geeignet sind.

Eine weitere Aufgabe der Erfindung besteht darin, die Anzeigen für eine Integration in die Karten auch funktional besonders anzupassen.

Die Aufgabe wird erfindungsgemäß gemäß den Merkmalen der unabhängigen Ansprüche gelöst.

Die erfindungsgemäße Lösung sieht vor, daß außer der eigentlichen Trägerfolie, die nachfolgend als "Hauptträgerfolie" bezeichnet wird, eine weitere Trägerschicht vorgesehen ist, die nachfolgend als "'Funktionsträgerschicht" bezeichnet wird. Die Hauptträgerfolie ist an die besonderen Anforderungen zur Fertigung der Anzeige angepaßt und insbesondere sehr widerstandsfähig gegenüber den Beanspruchungen durch den Fertigungsprozeß, während die Funkstionsträgerschicht an die besonderen Anforderungen zur Integration in einer Chipkarte angepaßt und insbesondere dünn und flexibel ist. Hauptträgerfolie, Trägerschicht und Anzeige bilden einen Verbund. Erfindungsgemäß wird die Anzeige lediglich zusammen mit der Trägerschicht in das Trägermedium bzw. die Chipkarte integriert, wobei die Hauptträgerfolie von dem Verbund abgelöst wird. Durch das Ablösen der Hauptträgerfolie wird erreicht, daß die Materialien, die für den Herstellprozeß des Displays benötigt werden, d.h. die widerstandsfähige, dicke Hauptträgerfolie, die aber der Funktion der Karte eher hinderlich sind, nicht in die Karte integriert werden. Statt dessen wird die Anzeige mit der an die besonderen Anforderungen der Karte angepaßten Trägerschicht in die Karte integriert.

In einer besonderen Ausgestaltung der Erfindung ist vorgesehen, daß außer der Trägerschicht mit der Anzeige gleichzeitig weitere Bauelemente auf die Karte übertragen werden. Das können beispielsweise Steuerungselemente sein, die für das Funktionieren der Anzeige notwendig sind, wie ein Controller und Kontaktflächen zum Anschluß an den Chip bzw. eine Energiequelle. Diese Steuerungselemente können entweder in der Anzeige integriert sein oder als mit der Anzeige verbundener Schaltkreis auf der Funktionsträgerschicht angeordnet sein. Alternativ kann die Funktionsträgerschicht auch zur Verwendung als Karteninlett mindestens die Größe einer Standardkarte besitzen und als Leiterplatte dienen, auf der außer dem Display und den genannten Steuerungselementen auch Chip, Schalter, Batterie und Leitungen angeordnet werden.

Nachfolgend wird die Erfindung anhand der anhängenden Zeichnungen beispielhaft beschrieben.
- Figur 1: zeigt einen Schichtaufbau mit einer Hauptträgerschicht und einem Display;
- Figur 2a: zeigt ein Display in Draufsicht und im Querschnitt mit einem Displaycontroller und Kontaktflächen;
- Figur 2b: zeigt ein modulartiges Display;
- Figur 3: zeigt ein Verfahren zur Übertragung von Displays von einer Hauptträgerschicht auf einen kartenförmigen Träger;
- Figur 4: zeigt eine Anordnung von Displays auf einer Hauptträgerschicht als Bogen; und
- Figur 5: zeigt ein Display mit weiteren Bauelementen auf einem Substrat für ein Karteninlett.

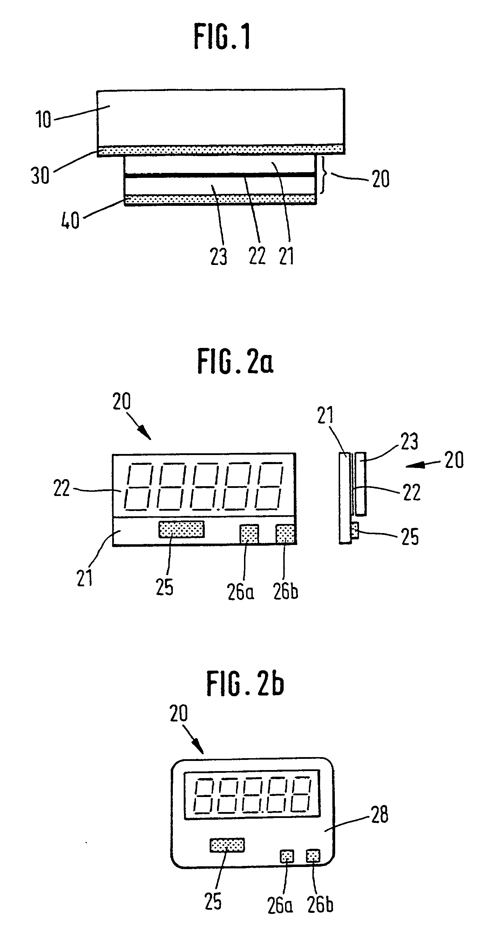

Figur 1 zeigt einen Verbund aus Hauptträgerfolie 10 und Display 20.

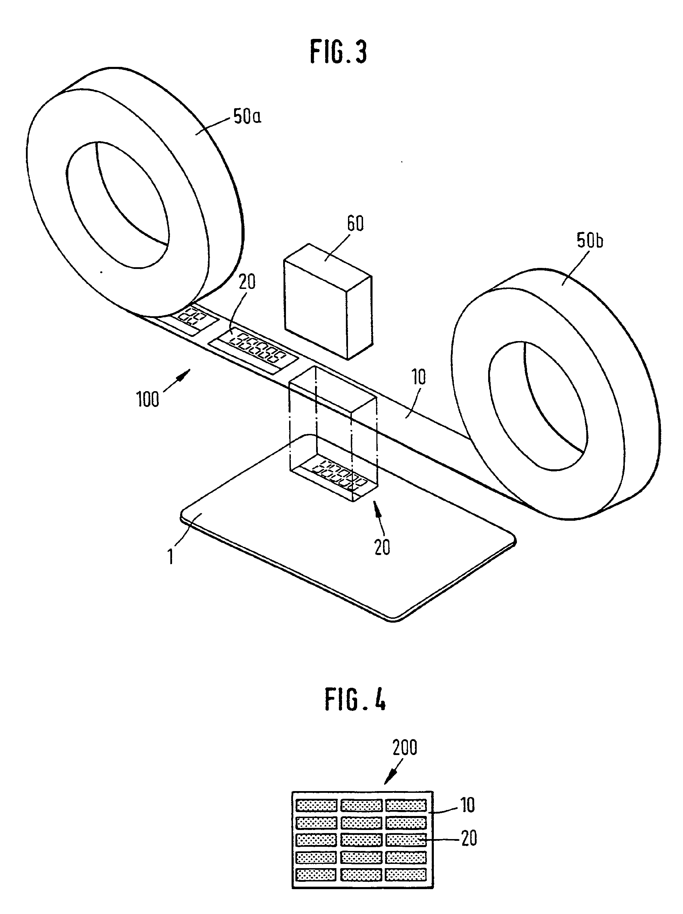

Die Hauptträgerfolie 10 kann ein Band 100 oder ein Bogen 200 sein (Fig. 3 und 4), auf dem die Displays gefertigt werden. Die Hauptträgerfolie 10 muß stabil und widerstandsfähig sein, um den Anforderungen für die Displayfertigung genügen zu können.

Auf die Hauptträgerfolie 10 wird zunächst eine Haftkleberschicht 30 aufgetragen, und auf dieser Haftkleberschicht 30 wird die Trägerschicht 21 fixiert. Auf der Trägerschicht 21 wiederum wird eine Funktionsschicht 22 erzeugt, die die aktive Schicht des Displays 20 bildet und daher nachfolgend gelegentlich auch als Anzeige 22 bezeichnet wird. Die Funktionsschicht 22 kann durch Prozesse wie Aufdampfen, Sputtern, Spin-Coating etc. erzeugt werden und beispielsweise ein Flüssigkristall-Material, leuchtende Materialien oder ähnliches sein. Die Funktionsschicht 22 kann auch mehrere Schichten aufweisen und Elektroden, Filter, Polarisatoren, Abstandhalter etc. enthalten. Über der Funktionsschicht 22 ist eine Basisschicht 23 mit einer Integrationskleberschicht 40, die zur späteren Fixierung des Displays 20 in bzw. auf einem Kartenkörper bestimmt ist angeordnet. Im dargestellten Fall muß die Trägerschicht 21 transparent sein. Aus fertigungstechnischen Gründen können die Displays 20 auch in umgekehrter Reihenfolge, d. h. beginnend mit der Basisschicht 23, gefertigt werden und anschließend mittels der Haftkleberschicht 30 auf die Hauptträgerfolie übertragen werden. Dazu kann eine weitere Hauptträgerfolie verwendet werden. Für die Integration in eine Chipkarte müssen die derart hergestellten Displays gewendet werden, z. B. dadurch, daß sie von der zur Herstellung verwendeten Hauptträgerfolie auf die Hauptträgerfolie 10 in der Weise übertragen werden, wie unten im Zusammenhang mit der Übertragung der Displays auf Chipkarten beschrieben.

Als Kleber für die Haftkleberschicht 30 wird ein Haftkleber gewählt, der kaum Scherkräfte aufnimmt. Für die Haftkleberschicht 30 sind Kleber mit guten Adhäsionseigenschaften aber nur geringen Kohösionseigenschaften geeignet. Derartige Kleber erzeugen insbesodere keinen starren Verbund zwischen den verklebten Materialien, weshalb ein Verschieben parallel zur Klebefläche in geringem Umfang möglich ist, während zur senkrechten Entfernung von der Klebefäche hoher Krafteinsatz nötig ist. Dies ist insbesondere vorteilhaft, wenn als Hauptträgerfolie ein aufgewickeltes Folienband 100 verwendet wird (Fig. 3). Denn durch die Verwendung des speziellen Haftklebers 30 wird kein fester Verbund zwischen Hauptträgerfolie 10 und Trägerschicht 21 erzeugt, so daß die Dehnung der Oberfläche der aufgewickelten Hauptträgerfolie 100 nicht von der Haftkleberschicht auf die Trägerschicht 21 übertragen wird. Dies hat zur Folge, daß die durch das Aufwickeln verursachten Spannungen in der Funktionsschicht 22 allein von der Dehnung der Oberfläche der Trägerschicht 21 abhängen. Da die Trägerschicht 21 aber extrem dünn ist ist diese Dehnung nahezu vernachlässigbar.

Wenn darüber hinaus für die Basisschicht 23 dasselbe Material mit derselben Materialstärke verwendet wird wie für die Trägerschicht 21 und diese Basisschicht 23 fest mit der Funktionsschicht 22 verbunden ist liegt die Funktionsschicht 22 in der mittleren Biegeebene zwischen Trägerschicht 21 und Basisschicht 23 und ist daher keinerlei Spannungen ausgesetzt, wenn der Gesamtverbund 100 (Figur 3) bestehend aus Hauptträgerfolie 10 und darauf angeordneten Displays 20 auf Rollen aufgerollt ist.

Dieser Effekt kann auch für die spätere Integration der Displays in Chipkarten ausgenutzt werden. Da Chipkarten häufig Biegungen und anderen mechanischen Belastungen ausgesetzt sind, ist es vorteilhaft auch für die Integrationskleberschicht 40 einen Klebstoff zu verwenden, der kaum Scherkräfte aufnimmt. Es ist aber auch die Verwendung eines vernetzenden Klebers möglich, also eines Klebers, der auch gute Kohäsionseigenschaften aufweist. Die Belastung der Displays durch Scherkräfte wird nämlich zusätzlich dardurch verringert, daß die Displays nur noch eine sehr geringe Dicke aufweisen, da Trägerschicht 21 und Basisschicht 23 sehr dünn gestaltet werden können. Die zwischen der Trägerschicht 21 und der Basisschicht 23 eingelagerte, empfindliche Funktionsschicht 22 wird somit weniger beansprucht, da die bei Biegung auftretenden Scherkräfte in dünnen Schichten geringer sind.

Die Träger- und Basisschichten 21, 23 bestehen bevorzugt aus PET und weisen Dicken von etwa 200 µm auf. Werden aber z. B. Leuchtstoffe in der Funktionsschicht 22 verwendet die auf Umwelteinflüsse reagieren, kann auch eine Glasschicht 21 verwendet werden. Schicht 23 muß in diesem Fall biegesteif, z. B. aus Metall, gestaltet sein, um ein Brechen der Glasschicht 21 zu verhindern. Wird die Glasschicht 21 zusätzlich mit einer Kunststoffolie verbunden, kann eine weitere Erhöhung der Widerstandsfähigkeit gegen Bruch erreicht werden. Aus fertigungstechnischer Sicht kann es bei einer Kombination Glas/Metall für Trägerschicht 21 und Basisschicht 23 sinnvoll sein, wie oben beschrieben, die Funktionsschicht auf der Basisschicht 23 (Metall) aufzubringen und diese mittels der Glasschicht 21 (Trägerschicht) abzudecken. Für den Einbau in eine Chipkarte ist dann der beschriebene Wechsel auf eine zweite Hauptträgerfolie nötig.

In Figur 2a ist ein Display 20 bestehend aus Trägerschicht 21, Funktionsschicht bzw. Anzeige 22 und Basisschicht 23 in Draufsicht und im Querschnitt dargestellt. In der Funktionsschicht 22 sind diejenigen Bauelemente *25*, 26a, 26b integriert, die zur Steuerung der Anzeige notwendig sind. Zu diesem Zweck sind auf der Trägerschicht 21 ein Displaycontroller 25 und Kontaktflächen 26a, 26b integriert. Über die Kontaktflächen 26a, 26b kann das Display 20 mit dem Chip einer Chipkarte elektrisch leitend verbunden werden.

In Figur 2b ist eine alternative Ausführungsform des in Bezug auf Figur 2a beschriebenen Displays 20 dargestellt. Der Unterschied besteht darin, daß auf ein separates Substrat 28 ein vorgefertigtes Display 20 sowie der Displaycontroller 25 und die Kontaktflächen 26a, 26b aufgebracht sind, die mit dem Display 20 elektrisch leitend verbunden werden.

Sowohl das kompakte Display nach Figur 2a als auch das Displaymodul nach Figur 2b können in eine Chipkarte eingesetzt werden. Die Ausführungsform nach Figur 2a wird bevorzugt, da auf der Trägerschicht 21 feinere Leitstrukturen erzielt werden können und eine separate elektrische Kontaktierung z. B. des Displaykontrollers 25 mit der Anzeige 22 gegenüber der Ausführungsform nach Figur 2b eingespart werden kann. Somit ist die Ausführungsform nach Figur 2a als besonders platzsparend und preiswert einzustufen. In beiden Fällen kann es vorgesehen sein, daß die Trägerfolie 21 nur im Bereich der eigentlichen Anzeige, in den Figuren 2a,b als Segmentzeichen dargestellt transparent ist.

In Figur 3 ist die Übertragung der Displays 20 von der Hauptträgerfolie 10 auf eine Chipkarte 1 dargestellt. Die Hauptträgerfolie 10 bildet mit den Displays 20 ein Transferband 100. Hauptträgerfolie 10 und Displays 20 können aber auch als Mehrnutzenbogen 200 ausgebildet sein, wie in Figur 4 dargestellt. Dies hat auf die Art und Weise der Übertragung der Displays 20 auf die Chipkarten 1 keinen Einfluß.

In Figur 3 ist zu erkennen, daß das Transferband 100 auf einer Vorratsrolle 50a aufgerollt ist und von dieser abgewickelt und auf die Aufwickelrolle 50b aufgewickelt wird. Der Vorschub des Transferbandes 100 beim Abwickeln von der Vorratsrolle 50a auf die Aufwickelrolle 50b erfolgt vorzugsweise intermittierend und synchronisiert mit der Zurverfügungstellung einer Chipkarte 1, auf die ein Display 20 übertragen werden soll. Die Chipkarte 1 kann auch ein Halbzeug sein, beispielsweise ein Karteninlett, und erst später zu einer fertigen Karte weiterverarbeitet werden.

Die Hauptträgerfolie 10 ist in Figur 3 als durchsichtiges Kunststoffband gezeigt, so daß die Displays 20 durch die Hauptträgerfolie 10 erkennbar sind. Mit dem Prägestempel 60 wird ein Display 20 auf eine unter dem Transferband 100 exakt positionierte Chipkarte 1 im Hot-Stamping-Verfahren übertragen, d. h. Chipkarte 1 und Display 20 werden mittels Wärme und Druck verbunden, indem mittels des Prägestempels 60 ein Kontakt zwischen der Integrationskleberschicht 40 auf der Rückseite des Displays 20 und der Oberfläche der Chipkarte 1 hergestellt wird. Anstelle des Hot-Stamping-Verfahrens kann auch ein Kaltklebeverfahren verwendet werden, bei dem z. B. vernetzende Flüssigkleber oder Haftkleber eingesetzt werden. Die Adhäsionskräfte der Haftkleberschicht 30 sind gegenüber den Adhäsionskräften der Integrationskleberschicht 40 so gering, daß sich die Trägerschicht 21 des Displays 20 vollständig von der Haftkleberschicht 30 löst. Die Trägerschicht 21 liegt somit nach der Übertragung von dem Transferband 100 auf die Chipkarte 1 als äußerste Schicht vor. Sie ist als sehr dünne optische Schicht ausgebildet, damit die Funktionsschicht bzw. die Anzeige 22 durch die Trägerschicht 21 hindurch erkennbar ist. Nach erfolgter Übertragung wird das Transferband 100 weiter getaktet und eine neue Chipkarte 1 so unter dem Transferband 100 angeordnet, daß die Übertragung des nächsten Displays 20 auf die neue Chipkarte 1 erfolgen kann.

Es ist auch möglich, das Display 20 zusammen mit einem Teil der Hauptträgerfolie 10 aus dem Transferband herauszustanzen, wenn das Display 20 auf die Chipkarte 1 übertragen wird. Die dabei mitübertragene Hauptträgerfolie 10 wird in einem nachfolgenden Schritt entfernt. Dies hat den Vorteil, daß die Hauptträgerfolie erst dann entfernt zu werden braucht wenn eine feste Verbindung zwischen der Integrationskleberschicht 40 und der Chipkarte 1 sichergestellt ist. In der Zeit der Verfestigung der Integrationskleberschicht 40 kann bereits das nächste Display 20 auf eine neue Chipkarte 1 übertragen werden.

Die Übertragung des Displays 20 auf die Chipkarte 1 kann auch nach der sogenannten Etikettentechnik erfolgen, dabei werden die Displays 20 mit einem Kleber auf einem Träger befestigt, von dem sie später abgezogen werden können, weil der Kleber auf dem Träger schlechter haftet als an der Stelle der Chipkarte 1, die für die Displays 20 vorgesehen ist. Als Träger eignet sich z. B. silikoniertes Papier. Das heißt die auf der Hauptträgerfolie 10 angeordneten Displays werden mit ihrer Integrationskleberschicht 40 auf die Chipkarte 1 aufgebracht, und die Hauptträgerfolie 10 wird anschließend abgezogen. Diese Technik ist besonders geeignet im Zusammenhang mit dem in Figur 4 dargestellten Mehrnutzenbogen 200.

Bei der Übertragung des Displays 20 auf die Chipkarte 1 können gleichzeitig die Anzeigenkontakte 26a,b mit den entsprechenden Gegenkontakten der Chipkarte elektrisch leitend verbunden werden.

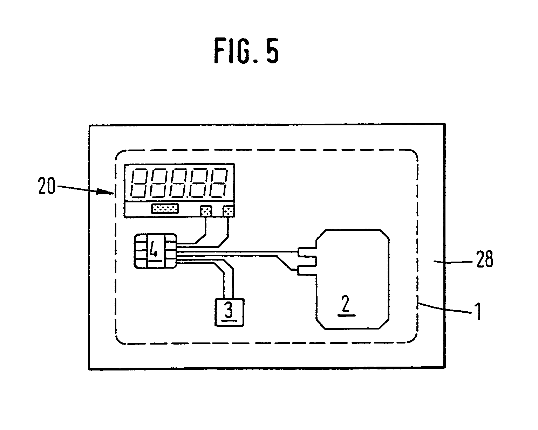

In Figur 5 ist eine besondere Ausführungsform der Erfindung dargestellt, bei der das Display 20 auf ein Substrat 28 übertragen wird, welches als gedruckte Leiterplatte ausgebildet ist. Das Substrat 28 ist als Inlett für eine Karte bestimmt und weist daher mindestens die äußeren Abmessungen einer Chipkarte 1 auf. Die Abmessungen einer Chipkarte 1 sind in Figur 5 gestrichelt dargestellt. Auf dem Substrat 28 sind außer dem Display 20 desweiteren ein Chip 4 für die kontaktierte Datenübertragung, ein Schalter 3 und eine Batterie 2 angeordnet und über Leitungen elektrisch miteinander verbunden. Das Display 20 entspricht dem in Figur 2a dargestellten kompakten Display. Es ist aber auch möglich, anstelle des kompakten Displays ein Displaymodul, wie in Figur 2b dargestellt, zu verwenden. Alternativ kann das Substrat 28 durch die Trägerschicht 21 gebildet werden, wobei die elektrischen Bauelemente 2, 3, 4 vorzugsweise erst nach der Fertigung des Displays 20 auf die Trägerschicht 21 aufgebracht und mit dem Display 20 elektrisch verbunden werden.

Abschließend kann die Chipkarte mit einer Deckschicht beispielsweise einer Folie, beschichtet werden, die mindestens im Bereich der Anzeige 22, wie sie in Fig 2a,b durch Segmentzeichen dargestellt ist transparent ist. Es kann auch vorgesehen sein, daß eine Deckschicht verwendet wird, die im Bereich der Anzeige 22 eine Aussparung aufweist wenn die Trägerschicht 21 transparent ist wie oben beschrieben, und über ausreichende mechanische Stabilität verfügt.

Auf die Aufbringung einer Deckschicht kann verzichtet werden, wenn ein Display, wie in Fig. 2a,b dargestellt in eine entsprechend dimensionierte Aussparung der Chipkarte eingesetzt wird.

Ebenso kann bei geeigneter Technologie zur Herstellung der Anzeige 22 auf eine Basisschicht 23 verzichtet werden. Die Integrationskleberschicht 40 wird dann direkt auf die Anzeige, d. h. die Funktionsschicht 22, die beispielsweise drucktechnisch hergestellt werden kann, aufgebracht.

## Patentansprüche

1. Verfahren zur Integration eines Displays (20) in ein kartenförmiges Trägermedium (1) umfassend die Schritte
- Zurverfügungstellen eines Halbzeugs umfassend eine Hauptträgerfolie (10), eine Funktionsschicht (22), die eine Anzeige bildet, und eine Trägerschicht (21) wobei die Trägerschicht (21) zwischen der Funktionsschicht (22) und der Hauptträgerfolie (10) angeordnet wird,
- Zurverfügungstellen eines kartenförmigen Trägermediums (1) und
- Übertragen der Trägerschicht (21) mit der Funktionsschicht (22) auf das Trägermedium (1), wobei die Hauptträgerfolie (10) des Halbzeugs entfernt wird und
- auf der der Trägerschicht (21) gegenüberliegenden Seite der Funktionsschicht (22) eine Basisschicht (23) angeordnet wird und
- auf der der Funktionsschicht (22) gegenüberliegenden Seite der Basisschicht (23) eine Integrationskleberschicht (40) zur Fixierung des Displays (20) in bzw. auf dem Trägermedium (1) angeordnet wird,
**dadurch gekennzeichnet, daß**
- in der Funktionsschicht (22) neben der Anzeige ein für die Steuerung der Anzeige notwendiger Displaycontroller (25) und Kontaktflächen (26a, 26b) zur elektrisch leitenden Verbindung des Displays (20) mit einem Chip des kartenförmigen Trägermediums (1) integriert angeordnet werden.

2. Verfahren nach Anspruch 1, **dadurch gekennzeichnet, daß** das Halbzeug in Bandform (100) zur Verfügung gestellt wird.

3. Verfahren nach Anspruch 1, **dadurch gekennzeichnet, daß** das Halbzeug als Mehrnutzenbogen (200) zur Verfügung gestellt wird.

4. Verfahren nach einem der Ansprüche 1 bis 3, **dadurch gekennzeichnet, daß** die Übertragung im Heißprägeverfahren erfolgt.

5. Verfahren nach einem der Ansprüche 1 bis 4, **dadurch gekennzeichnet, daß** zumindest ein Teil der Hauptträgerfolie (10) zusammen mit der Funktionsschicht (22) und der Trägerfolie (21) aus dem Transferband (100) oder dem Mehrnutzenbogen (200) ausgestanzt wird.

6. Verfahren nach einem der Ansprüche 1 bis 5, **dadurch gekennzeichnet, daß** die Übertragung nach dem Etikettenverfähren erfolgt, das heißt die auf der Hauptträgerfolie (10) angeordneten Displays werden auf das Trägermedium (1) aufgebracht, und die Hauptträgerfolie (10) wird anschließend abgezogen.

7. Verfahren nach einem der Ansprüche 1 bis 6, **dadurch gekennzeichnet, daß** als Trägermedium (1) eine Chipkarte zur Verfügung gestellt wird.

8. Halbzeug für die Integration eines Displays (20) in ein kartenförmiges Trägermedium (1) umfassend
- eine Hauptträgerfolie (10),
- eine Funktionsschicht (22), die eine Anzeige bildet, und
- eine Trägerschicht (21), wobei die Trägerschicht (21) zwischen der Funktionsschicht (22) und der Hauptträgerfolie (10) angeordnet ist und mit der Funktionsschicht (22) von der Hauptträgerfolie (10) ablösbar ist,
- auf der der Trägerschicht (21) gegenüberliegenden Seite der Funktionsschicht (22) eine Basisschicht (23) angeordnet ist und
- auf der der Funktionsschicht (22) gegenüberliegenden Seite der Basisschicht (23) eine Integrationskleberschicht (40) zur Fixierung des Displays (20) in bzw. auf dem Trägermedium (1) angeordnet ist
**dadurch gekennzeichnet, daß**
- in der Funktionsschicht (22) neben der Anzeige ein für die Steuerung der Anzeige notwendiger Displaycontroller (25) und Kontaktflächen (26a, 26b) zur elektrisch leitenden Verbindung des Displays (20) mit einem Chip des kartenförmigen Trägermediums (1) integriert angeordnet sind.

9. Halbzeug nach Anspruch 8, **dadurch gekennzeichnet, daß** die Hauptträgerfolie (10) dicker ausgebildet ist als die Trägerschicht (21).

10. Halbzeug nach einem der Ansprüche 8 bis 9, **dadurch gekennzeichnet, daß** die Trägerschicht (21) transparent ist.

11. Halbzeug nach Anspruch 8 bis 10, **dadurch gekennzeichnet, daß** die Integrationskleberschicht (40) Scherkräfte nur in geringem Umfang aufnimmt.

12. Halbzeug nach einem der Ansprüche 8 bis 11, **dadurch gekennzeichnet, daß** die Hauptträgerfolie (10) ein Folienband (100) ist.

13. Halbzeug nach einem der Ansprüche 8 bis 12, **dadurch gekennzeichnet, daß** die Hauptträgerfolie (10) von einem Mehrnutzenbogen (200) gebildet wird.

14. Halbzeug nach einem der Ansprüche 8 bis 13, **dadurch gekennzeichnet, daß** die Trägerfolie (21) mit der Funktionsschicht (22) auf einem Substrat (28) angeordnet ist.

15. Halbzeug nach Anspruch 14, **dadurch gekennzeichnet, daß** das Substrat (28) mindestens die äußeren Abmessungen einer Chipkarte aufweist und eine Leiterplatte für weitere Bauelemente wie Chip (4), Schalter (3) und Batterie (2) bildet.

16. Halbzeug nach Anspruch 14 oder 15, **dadurch gekennzeichnet, daß** das Substrat (28) durch die Trägerschicht (21) selbst gebildet wird.

17. Halbzeug nach einem der Ansprüche 8 bis 16, **dadurch gekennzeichnet, daß** das kartenförmige Trägermedium (1) eine Chipkarte ist.

18. Kartenförmiges Trägermedium mit einem integrierten Display, **dadurch gekennzeichnet, daß** das Display (20) als Halbzeug nach einem der Ansprüche 8 bis 17 aufgebaut ist.

## Claims

1. A method for integrating a display (20) into a card-shaped carrier medium (1) comprising the steps of
- providing a semi-finished product comprising a main carrier foil (10), a function layer (22) forming an indicator, and a carrier layer (21), the carrier layer (21) being disposed between the function layer (22) and the main carrier foil (10),
- providing a card-shaped carrier medium (1), and
- transferring the carrier layer (21) with the function layer (22) to the carrier medium (1), whereby the main carrier foil (10) of the semi-finished product is removed, and
- a base layer (23) is disposed on the side of the function layer (22) opposing the carrier layer (21), and
- an integration adhesive layer (40) for fixing the display (20) in or on the carrier medium (1) is disposed on the side of the base layer (23) opposing the function layer (22),
**characterized in that**
- a display controller (25) necessary for controlling the indicator, and contact surfaces (26a, 26b) for electroconductive connection of the display (20) to a chip of the card-shaped carrier medium (1), are disposed in integrated fashion in the function layer (22) besides the indicator.

2. The method according to claim 1, **characterized in that** the semi-finished product is provided in band form (100).

3. The method according to claim 1, **characterized in that** the semi-finished product is provided as a multi-up sheet (200).

4. The method according to any of claims 1 to 3, **characterized in that** the transfer is effected by the hot stamping method.

5. The method according to any of claims 1 to 4, **characterized in that** at least a portion of the main carrier foil (10) together with the function layer (22) and the carrier foil (21) is punched out of the transfer band (100) or the multi-up sheet (200).

6. The method according to any of claims 1 to 5, **characterized in that** the transfer is effected by the label method, that is, the displays disposed on the main carrier foil (10) are applied to the carrier medium (1), and the main carrier foil (10) is subsequently taken off.

7. The method according to any of claims 1 to 6, **characterized in that** a chip card is provided as the carrier medium (1).

8. A semi-finished product for integrating a display (20) into a card-shaped carrier medium (1) comprising
- a main carrier foil (10),
- a function layer (22) forming an indicator, and
- a carrier layer (21), the carrier layer (21) being disposed between the function layer (22) and the main carrier foil (10) and being detachable with the function layer (22) from the main carrier foil (10),
- a base layer (23) is disposed on the side of the function layer (22) opposing the carrier layer (21), and
- an integration adhesive layer (40) for fixing the display (20) in or on the carrier medium (1) is disposed on the side of the base layer (23) opposing the function layer (22),
**characterized in that**
- a display controller (25) necessary for controlling the indicator, and contact surfaces (26a, 26b) for electroconductive connection of the display (20) to a chip of the card-shaped carrier medium (1), are disposed in integrated fashion in the function layer (22) besides the indicator.

9. The semi-finished product according to claim 8, **characterized in that** the main carrier foil (10) is configured to be thicker than the carrier layer (21).

10. The semi-finished product according to either of claims 8 to 9, **characterized in that** the carrier layer (21) is transparent.

11. The semi-finished product according to claims 8 to 10, **characterized in that** the integration adhesive layer (40) absorbs shear forces only to a small extent.

12. The semi-finished product according to any of claims 8 to 11, **characterized in that** the main carrier foil (10) is a foil band (100).

13. The semi-finished product according to any of claims 8 to 12, **characterized in that** the main carrier foil (10) is formed by a multi-up sheet (200).

14. The semi-finished product according to any of claims 8 to 13, **characterized in that** the carrier foil (21) is disposed with the function layer (22) on a substrate (28).

15. The semi-finished product according to claim 14, **characterized in that** the substrate (28) has at least the external dimensions of a chip card and forms a circuit board for further components such as chip (4), switch (3) and battery (2).

16. The semi-finished product according to claim 14 or 15, **characterized in that** the substrate (28) is formed by the carrier layer (21) itself.

17. The semi-finished product according to any of claims 8 to 16, **characterized in that** the card-shaped carrier medium (1) is a chip card.

18. A card-shaped carrier medium having an integrated display, **characterized in that** the display (20) is constructed as a semi-finished product according to any of claims 8 to 17.

## Revendications

1. Procédé d'intégration d'un écran (20) dans un matériel porteur (1) en forme de carte, comprenant les étapes:
- mise à disposition d'un semi-fini comprenant une feuille-support principale (10), une couche de fonction (22) qui forme un affichage, et une couche support (21), la couche support (21) étant disposée entre la couche de fonction (22) et la feuille-support principale (10),
- mise à disposition d'un matériel porteur (1) en forme de carte et
- transfert de la couche support (21) avec la couche de fonction (22) sur le matériel porteur (1), la feuille-support principale (10) du semi-fini étant enlevée et
- une couche de base (23) étant disposée sur la face de la couche de fonction (22) opposée à la couche support (21) et
- une couche de colle d'intégration (40) étant disposée sur la face de la couche de base (23) opposée à la couche de fonction (22) pour la fixation de l'écran (20) dans ou sur le matériel porteur (1),
**caractérisé en ce que**
- un contrôleur d'écran (25) nécessaire pour la commande de l'affichage ainsi que des surfaces de contact (26a, 26b) pour la connexion électroconductrice de l'écran (20) avec une puce du matériel porteur (1) en forme de carte sont disposés de manière intégrée dans la couche de fonction (22) à côté de l'affichage.

2. Procédé selon la revendication 1, **caractérisé en ce que** le semi-fini est mis à disposition sous forme de ruban (100).

3. Procédé selon la revendication 1, **caractérisé en ce que** le semi-fini est mis à disposition sous forme de plaque multi-utilisations (200).

4. Procédé selon une des revendications de 1 à 3, **caractérisé en ce que** le transfert a lieu par procédé d'estampage à chaud.

5. Procédé selon une des revendications de 1 à 4, **caractérisé en ce qu'**au moins une partie de la feuille-support principale (10) est découpée en même temps que la couche de fonction (22) et que la feuille support (21) dans la bande de transfert (100) ou dans la plaque multi-utilisations (200).

6. Procédé selon une des revendications de 1 à 5, **caractérisé en ce que** le transfert a lieu après le processus d'étiquette, c'est-à-dire que les écrans disposés sur la feuille-support principale (10) sont appliqués sur le matériel porteur (1) et que la feuille-support principale (10) est ensuite retirée.

7. Procédé selon une des revendications de 1 à 6, **caractérisé en ce que** c'est une carte à puce qui est mise à disposition en tant que matériel porteur (1).

8. Semi-fini pour l'intégration d'un écran (20) dans un matériel porteur (1) en forme de carte, comprenant
- une feuille-support principale (10),
- une couche de fonction (22), qui forme un affichage, et
- une couche support (21), la couche support (21) étant disposée entre la couche de fonction (22) et la feuille-support principale (10) et étant retirable de la feuille-support principale (10) en même temps que la couche de fonction (22),
- une couche de base (23) étant disposée sur la face de la couche de fonction (22) opposée à la couche support (21) et
- une couche de colle d'intégration (40) étant disposée sur la face de la couche de base (23) opposée à la couche de fonction (22) pour la fixation de l'écran (20) dans ou sur le matériel porteur (1),
**caractérisé en ce que**
- un contrôleur d'écran (25) nécessaire pour la commande de l'affichage et des surfaces de contact (26a, 26b) pour la connexion électroconductrice de l'écran (20) avec une puce du matériel porteur (1) en forme de carte sont disposés de manière intégrée dans la couche de fonction (22) à côté de l'affichage.

9. Semi-fini selon la revendication 8, **caractérisé en ce que** la feuille-support principale (10) est réalisée sous forme plus épaisse que la couche support (21).

10. Semi-fini selon une des revendications de 8 à 9, **caractérisé en ce que** la couche support (21) est transparente.

11. Semi-fini selon la revendication de 8 à 10, **caractérisé en ce que** la couche de colle d'intégration (40) n'absorbe que faiblement les forces de cisaillement.

12. Semi-fini selon une des revendications de 8 à 11, **caractérisé en ce que** la feuille-support principale (10) est un ruban de film (100).

13. Semi-fini selon une des revendications de 8 à 12, **caractérisé en ce que** la feuille-support principale (10) est constituée par une plaque multi-utilisations (200).

14. Semi-fini selon une des revendications de 8 à 13, **caractérisé en ce que** la feuille support (21) est disposée avec la couche de fonction (22) sur un substrat (28).

15. Semi-fini selon la revendication 14, **caractérisé en ce que** le substrat (28) présente aux moins les dimensions extérieures d'une carte à puce et constitue un circuit imprimé pour d'autres composants tels que puce (4), commutateur (3) et pile (2).

16. Semi-fini selon la revendication de 14 à 15, **caractérisé en ce que** le substrat (28) est constitué par la couche support (21) elle-même.

17. Semi-fini selon une des revendications de 8 à 16, **caractérisé en ce que** le matériel porteur (1) en forme de carte est une carte à puce.

18. Matériel porteur en forme de carte avec un écran intégré, **caractérisé en ce que** l'écran (20) est réalisé en tant que semi-fini selon une des revendications de 8 à 17.
